# EUROPEAN PATENT APPLICATION

(11) **EP 1 383 051 A1**
(43) Date of publication of application: **21.01.2004**
(21) Application number: 02707251.1
(22) Date of filing: 29.03.2002
(51) Int. Cl.: G06F 13/00

(54) **PERSONAL BANNER CREATING PROGRAM**

(30) Priority: 30.03.2001 JP 2001100501
(71) Applicant: Musashi Chemical Industry, Co., Ltd., Tokyo 116-0013 (JP)
(72) Inventor: HAYASHI, Yoshifumi, Katsushika-ku, Tokyo 125-0061 (JP); YAMADA, Fumikazu, Katsushika-ku, Tokyo 124-0021 (JP); SEKI, Kazuharu, Setagaya-ku, Tokyo 157-0077 (JP)
(74) Representative: Calderbank, Thomas Roger
(86) International application number: PCT/JP2002/003166
(87) International publication number: WO 2002/080000

(57) **Abstract**

A desired one of existing banners attached to a home page is modified into a personal banner which is selected by an operator. A personal banner preparation program records an address of a home page and an existing banner which are to be modified, an image of a personal banner which replaces the personal banner, and a linked address of the personal banner. The personal banner preparation program monitors a browser, and whenever the existing banner is received, modifies it into a personal banner before delivering it to the browser. Merely selecting the personal banner on the browser allows a desired linked home page which is set up by the operator to be viewed immediately.

## Description

### TECHINICAL FIELD

The present invention relates to a personal banner preparation program, and more particularly, to a personal banner preparation program which allows an existing banner which is attached to a home page to be modified into an operator-elected personal banner.

### BACKGROUND ART

Connecting a personal computer with an internet via a communication channel in order to display a home page through a browser is extensively common in the art. A home page of this kind is generally attached with a plurality of existing banners for purpose of advertisement, and clicking (selecting) one of them enables a link to another home page to be established. However, because the existing banners are previously determined by those people who prepared the home pages, it is not assured that the existing banners attached with the home page are such banners which enable a link to a home page or pages which the operator of the personal computer desires to browse. Where there are a plurality of home pages which the operator frequently desires to browse, it is necessary in order to reach each home page which he desires to brows that the address of each home page to be browsed be entered and selected, resulting in a troublesome operation.

### DISCLOSURE OF THE INVENTION

In view of the foregoing, the present invention provides a personal banner preparation program which allows an existing banner which is previously attached to a particular home page selected by an operator to be modified into an operator-elected personal banner, which when selected, enables a desired home page to be immediately displayed.

Specifically, the present invention provides a personal banner preparation program which allows an existing banner attached to a home page which is received via an internet to be modified into a personal banner, comprising the steps of
recording an existing banner which is to be modified into a personal banner, the image of a personal banner that is to replace the existing banner and a linked address of the personal banner;
entering the data of the home page before the home page is to be received by a browser via the internet and modifying the existing banner attached to the home page into the personal banner before the modified data of the home page is delivered to the browser.

According to the personal banner preparation program, an existing banner which is to be modified into a personal banner, the image of a personal banner which is to replace the existing banner, and a linked address of the personal banner are previously recorded.

When the home page is then received via the internet by the browser, the personal banner preparation program enters the data of the home page prior to the browser, and if a particular existing banner which is to be modified into the personal banner is found from existing banners attached to the home page, the particular existing banner is modified into the image of the personal banner, and the linked address of the particular existing banner is replaced by the linked address of the personal banner, subsequently delivering the modified data of the home page to the browser.

As a consequence, the browser displays the home page with the personal banner which replaced the particular existing banner, and when the displayed personal banner is selected by the operator, a home page which is specified by the linked address of the personal banner is displayed immediately.

It will thus be seen that when an existing banner attached to a home page which is frequently browsed by an operator is modified into a personal banner, a troublesome operation of entering an address to browse a different desired home page, displaying and electing the address can be dispensed with.

### BRIEF DESCRIPTION OF THE DRAWINGS

Fig. 1 is a schematic view illustrating a personal computer 1 which is connected through a communication channel 2 with a WEB server 3;
Fig. 2 illustrates an example of a home page which is displayed by a browser 4;
Fig. 3 is a flow chart which is used when modifying an existing banner into a personal banner;
Fig. 4 is a view of display tag list on the home page shown in Fig. 2; and
Fig. 5 is a flow chart which is used when modifying an existing banner into a personal banner.

### BEST MODES OF CARRYING OUT THE INVENTION

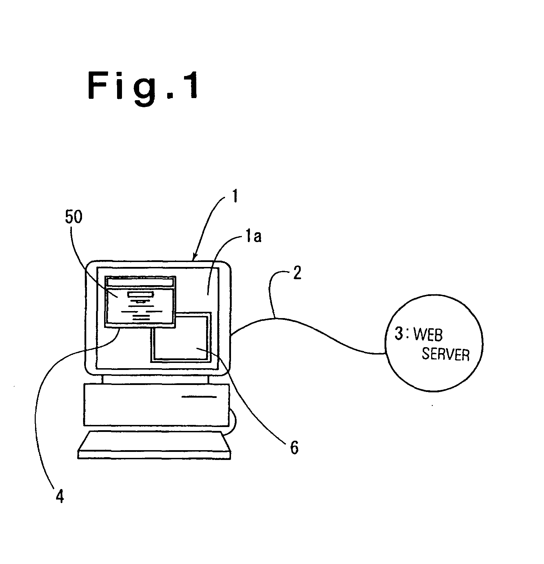

An embodiment of the present invention will now be described with reference to the drawings. In Fig. 1, a personal computer 1 can be connected through a communication channel 2 with WEB server 3 of the internet.

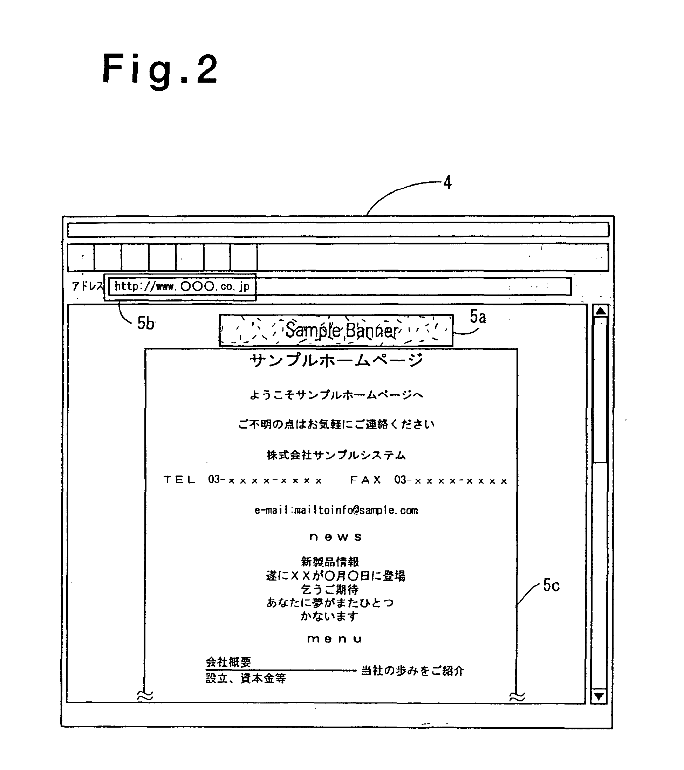

A browser 4 is previously installed in the personal computer 1, and is arranged to allow a home page 5 which is received from the WEB server 3 to be displayed on a display 1a of the personal computer 1. Fig. 2 shows an example of the home page 5 displayed by the browser 4. As shown, the home page 5 is attached with an existing banner 5a, which is known in itself, and which allows a link to another home page, when clicked, for purpose of advertisement.

As shown in Fig. 1, the personal computer 1 is previously installed with a personal banner preparation program 6 according to the present invention, and the screen of the program 6 is displayed on the display 1a.

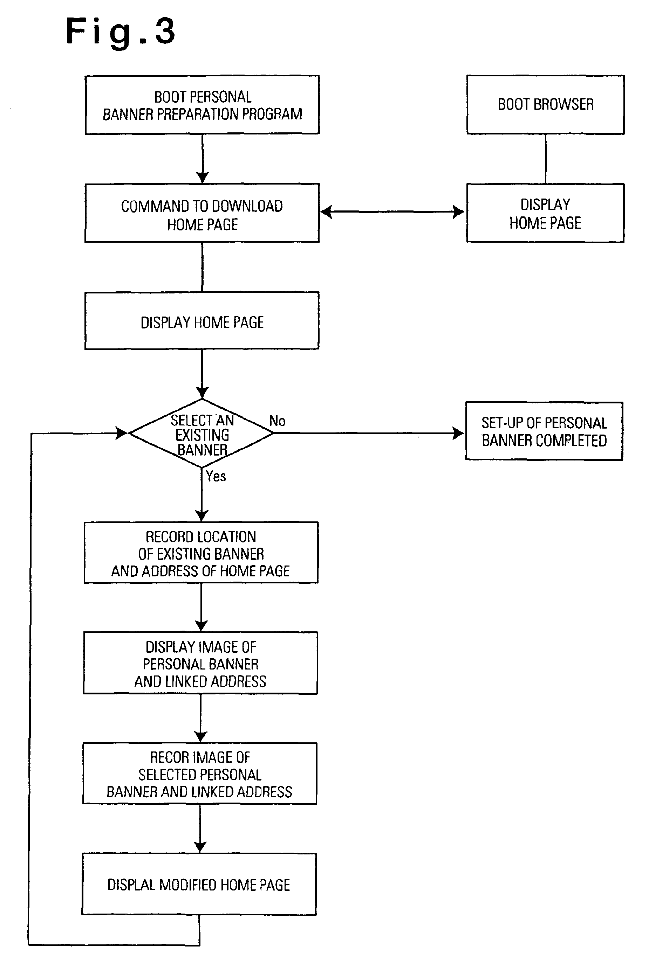

As shown in Fig. 3, when activating the personal banner preparation program, an existing banner which is to be modified into a personal banner is initially chosen.

Specifically, the operator first boots the personal banner preparation program 6 and the browser 4, causing the browser 4 to display a home page 5 having an existing banner 5a which is to be modified. In this process, it is not necessary that the browser 4 be connected to the WEB server 3 of the internet through the communication channel, but instead the home page 5 which is saved within the personal computer 1 as a result of a previous connection may be displayed.

When the home page 5 which is to be modified is displayed by the browser 4, the personal banner preparation program 6 commands the home page 5 to be downloaded. The program 6 then downloads data relating to the home page 5 which is saved in the browser 4, allowing it to be displayed in the same configuration as it is displayed on the browser 4 according to the personal banner preparation program 6.

It is to be noted that in a variety of browsers 4 which are known in the art, the location where the data of the home page 5 which is currently displayed is stored is already known, and downloading such data is known in the art as it is used in commercially available home page preparation softwares and therefore will not be specifically described.

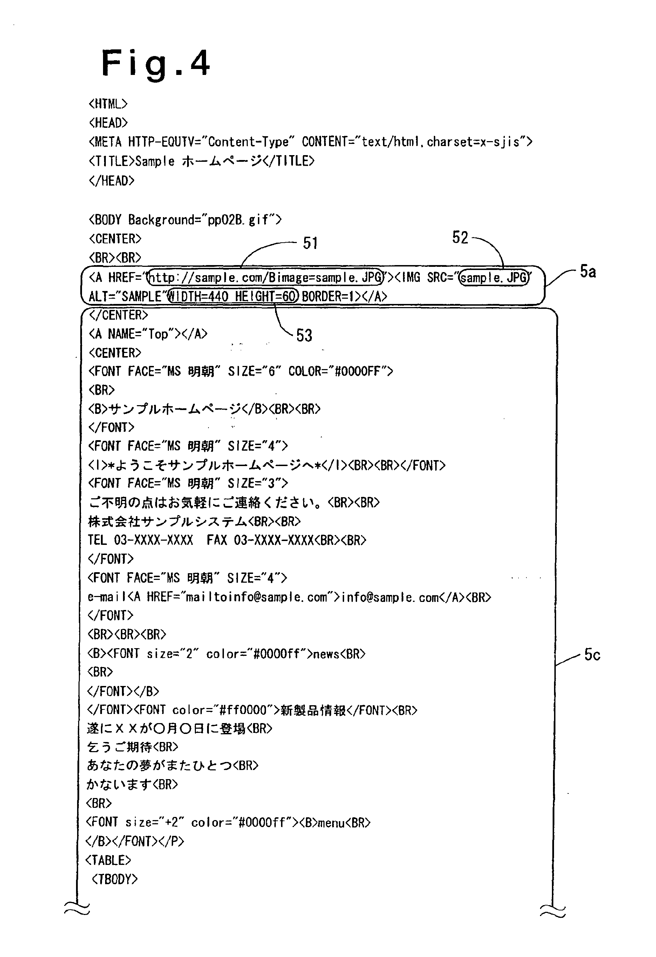

Fig. 4 shows an example of data of the home page which is downloaded by the personal banner preparation program 6. Such data is described in HTML language, and is referred to as a tag list.

The display tag list shown in Fig. 4 displays the home page 5 which is formed by images and letters of various sizes as trains of letters, and the display tag list describes the locations and sizes of letters which are to be disposed in the home page, an image file name of a background used in the home page and existing banners 5a.

The display tag list contains phrases and characters enclosed in < >, which are referred to as tags and which are designated to trains of letters which are actually displayed on the home page and/or image file names, thereby defining the locations and sizes of the trains of letters and image files.

When the home page 5 displayed on the browser 4 shown in Fig. 2 is compared against the display tag list for the home page 5 of Fig. 2 as shown in Fig. 4, it will be seen that 5a corresponds to an existing banner, 5b an address (URL) of the home page 5 and 5c remaining trains of letters.

It will also be noted that the existing banner 5a includes an address 51 of a home page to which the existing banner 5a is linked, a file name 52 of an image which is used in the existing banner 5a, and a size 53 which specifies the existing banner 5a when it is actually displayed on the home page.

Upon downloading the display tag list shown in Fig. 4, the personal banner preparation program 6 is capable of displaying the home page 5 in the same configuration as it is displayed on the browser 4, on the basis of the display tag list.

The operator then selects by using a mouse, for example, a particular existing banner 5a which is to be modified into a personal banner, from a plurality of existing banners which are displayed on the home page. Although a single existing banner is shown in Figs. 2 and 4, it is to be understood that a home page is generally attached with a plurality of existing banners.

When one of the existing banners 5a is selected by the operator, the browser 4 usually accesses and displays the linked address of the particular existing banner 5a, but the personal banner preparation program 6 identifies and stores an ordinal number which the selected particular existing banner 5 assumes among the plurality of existing banners attached to the home page 5.

Because the personal banner preparation program 6 displays the home page 5 on the basis of the display tag list 5 shown in Fig. 4 which is downloaded, it is capable of detecting which one of the existing banners has been selected in the similar manner as the browser 4. Since it is known from the ordinal number where on the home page the particular existing banner which is selected from the display tag list is displayed, this location is recorded as information representing the location on the home page 5 where the selected particular existing banner is to be displayed.

In this manner, when the particular existing banner 5a is selected from the displayed home page 5, the personal banner preparation program 6 stores the ordinal number of the existing banner 5a which is selected by the operator on the syntax tag list, and also stores the address (URL) of the home page 5.

The personal banner preparation program 6 then displays the set-up screen of the personal banner where images of a plurality of personal banners which are previously prepared and stored in the personal computer 1 are listed with the linked addresses of the respective personal banners.

When the operator selects the image of a particular personal banner and its linked address, the personal banner preparation program 6 then records them in the personal computer 1. At this time, the image of the personal banner may be prepared anew on the personal banner preparation program 6 or the linked address of the personal banner may be directly entered by the operator. It is unnecessary to set up the size of the banner for the personal banner because the image size of the existing banner 5a is utilized.

In this manner, the personal computer 1 records the image of the personal banner, or more particularly, the file name of the image which is selected together with the linked address as information which is used to set up the personal banner, and also records the position information including the address of the home page containing the selected particular existing banner and the ordinal number which the particular existing banner 5a assumes among the plurality of existing banners.

As a result of the described operations, the selected particular existing banner 5a is modified into the personal banner, and the personal computer 1 then again displays the home page 5. This time, the existing banner 5a is replaced by the personal banner which is set up in the manner mentioned above when it is displayed.

When the operator selects another existing banner, the described operation is repeated. Since the address of the home page 5 is already recorded, there is no need to record it again. Accordingly, in this instance, in addition to the set-up information for the personal banner which is already stored, the image of the second personal banner and its linked address are stored together with information representing the ordinal number which the second selected existing banner assumes among the plurality of existing banners.

The home page 5 is displayed another time, and at this time, the two selected existing banners are displayed as the personal banners which are set up in the manner mentioned above.

In the similar manner, a further existing banner may be selected and modified into a personal banner.

In the event a personal banner which is already set up and which is displayed is selected by the operator, it is subject to a modification. For the personal banner which is subject to the modification, another modified image and its linked address are stored.

After set-up information for personal banners are stored in the personal computer for each home page by repeating the described operation, the personal banner preparation program 6 modifies the existing banner 5a into a personal banner in the manner to be described below.

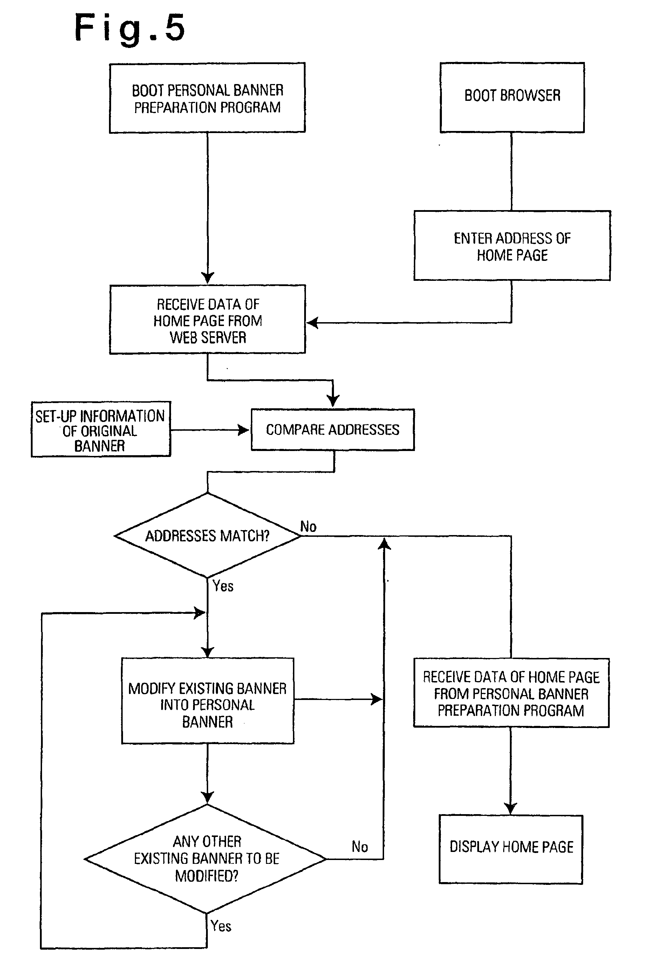

Referring to Fig. 5, the personal computer 1 is initially booted and after the personal banner preparation program 6 is booted, the browser 4 is booted. By booting the personal banner preparation banner 6 initially, it is possible for the personal banner preparation program 6 to monitor the status of the browser 4 from the time it is booted. If the personal banner preparation program 6 were booted after the browser 4 has been booted, the personal banner preparation program 6 will monitor the status of the browser 4 from the time the program is booted.

If the address of a suitable home page is now entered into the browser 4, the personal computer 1 begins to receive the data of the home page which corresponds to the entered address from the WEB server 3.

The data of the home page is normally downloaded directly into the browser 4, but the personal banner preparation program 6 monitors the browser 4 and downloads the data of the home page therein before the data is downloaded into the browser 4. Such means is already well known in the art as in a virus detecting program and therefore will not be specifically described.

When the browser 4 supplies the address of the home page indicating which home page has been accessed, the personal banner preparation program 6 retrieves the set-up information of the personal banner to determine whether or not this address is located within such set-up information.

If the address is not located within the set-up information of the personal banner, the personal banner preparation program 6 delivers the data of the home page which is received from the WEB server 3 directly to the browser 4, which then displays the received home page on the display 1a. In this instance, the browser 4 displays the home page which is transmitted from the WEB server 3 without any change.

By contrast, when the address of the home page matches the address of the home page contained in the set-up information of the personal banner which is saved in the personal computer 1, the personal banner preparation program 6 retrieves the data of the home page which is entered for the data of the existing banner.

By way of example, when the set-up information of the personal banner is constructed such that the third existing banner in the home page is to be modified into a personal banner, the personal banner preparation program 6 directly delivers the data of the home page which is entered to the browser 4 until the third existing banner is picked up. In this manner, the browser 4 can display the accessed home page without delay. When the personal banner preparation program 6 picks up the third existing banner from the entered data of the home page, the program 6 rewrites the image of this existing banner and its linked address to the image of the personal banner which is previously selected and its linked address before the data of the home page is delivered to the browser 4.

Accordingly, the browser 4 displays the home page which is based on the rewritten display tag list on the display 1b. At this time, because the content of the display tag list is rewritten in accordance with the set-up information of the personal banner, this personal banner is attached to the home page which is displayed by the browser 4 in place of the existing banner.

It will be seen that in the event the set-up information of personal banners which are attached to the home page contain the fourth and the sixth existing banner as ones which are to be modified into corresponding personal banners, the personal banner preparation program 6 modify the fourth and the sixth existing banner into corresponding personal banners, respectively, in the similar manner as described above.

When the browser 4 display the home page in this manner and when the personal banner which has been already modified and displayed by the browser 4 is selected, the linked address associated with this personal banner will be transmitted from the browser to the WEB server 3, which then responds by transmitting the linked home page to the personal computer 1.

At this time, the data of the home page which is transmitted from the WEB server 3 will be downloaded initially by the personal banner preparation program 6 in the manner mentioned above.

At this time, if an existing banner 5a which is attached to the home page is not modified to a personal banner, the personal banner preparation program 6 causes the browser 4 to display this home page while if this existing banner 5a has been modified, it is processed in the manner mentioned above to modify the existing banner 5a into a corresponding personal banner before commanding browser 4 to display the home page.

Accordingly, when an existing banner associated with a first home page is modified to a personal banner having a second home page as its linked address and an existing banner associated with the second home page is modified into a personal banner having the first home page as its linked address, the election of the personal banner allows an access to be made from one homepage to the other immediately.

In the described embodiment, an existing banner which is to be modified has been specified by the ordinal number of that existing banner on the associated home page, but the manner in which an existing banner which is to be modified is specified is not limited thereto, but any other means may be used which is capable of specifying an existing banner which is to be modified.

### INDUSTRIAL AVAILABILITY

As described, in accordance with the present invention, an existing banner which is attached to a home page can be modified to a personal banner having an elected image and an elected linked address, thus allowing a desired home page to be immediately accessed by selecting the personal banner.

## Claims

1. A personal banner preparation program which modifies an existing banner attached to a home page which is received via an internet into a personal banner; comprising the steps of
recording an existing banner which is to be modified into a personal banner, an image of a personal banner which replaces the existing banner, and a linked address of the personal banner;
entering the data of the home page prior to a browser when the browser is to receive the home page via the internet;
and modifying the existing banner attached to the home page into the personal banner before delivering the modified data of the home page to the browser.

2. A personal banner preparation program according to Claim 1 in which the personal banner preparation program displays the home page having an existing banner which is to be modified, and when the existing banner attached to the home page is selected for modification, records an address of the home page and a location on the home page of the existing banner which is selected.

3. A personal banner preparation program according to Claim 1 or 2 in which the personal banner preparation program displays images of a plurality of personal banners and whenever one of the images is selected, records the selected image as the image of a personal banner which replaces the existing banner.

4. A personal banner preparation program according to one of Claims 1 to 3 in which the personal banner preparation program displays linked addresses of a plurality of personal banners, and whenever one of the addresses is selected, records the address as a linked address of a personal banner which replaces the existing banner.

5. A personal banner preparation program according to one of Claims 1 to 3 in which the personal banner preparation program records a linked address which is entered by an operator as the linked address of a personal banner which replaces the existing banner.
